# EUROPEAN PATENT APPLICATION

(11) **EP 4 834 485 A1**
(43) Date of publication of application: **04.11.2026**
(21) Application number: 26163706.0
(22) Date of filing: 10.03.2026
(51) Int. Cl.: B05B 13/00

(54) **CLEANING SYSTEM FOR A COATING ROBOT**

(30) Priority: 30.04.2025 JP 2025075382
(71) Applicant: ABB Robotics Schweiz AG, 8050 Zürich (CH)
(72) Inventor: IIDA, Kisumi, Tokyo, 1416022 (JP); YAMAUCHI, Kuniharu, Tokyo, 1416022 (JP)
(74) Representative: Zimmermann & Partner Patentanwälte mbB

(57) **Abstract**

[Problem] To provide a cleaning system for a coating robot that can improve the cleaning performance with respect to nozzles and internal flow passages of a coating head without requiring large-scale dedicated equipment for cleaning.

[Means for solving] A cleaning system 1 for a coating robot 10 comprising: a coating head unit 30 comprising a coating head 31; a robot arm R1 that moves the coating head unit 30; a cap 93 that seals a nozzle forming surface 32; a cap movement mechanism 94 that moves the nozzle forming surface 32 relative to the cap 93; a coating material supply passage 52 that supplies coating material or cleaning fluid toward the coating head 31; a return flow passage 53 that recovers the coating material or the cleaning fluid; a pressurization means that pressurizes the cleaning fluid; and a control means that controls actuation of the pressurization means, wherein the control means controls actuation of the cap movement mechanism 94 so as to seal the nozzle forming surface 32 with the cap 93, and controls actuation of the pressurization means so that the cleaning fluid is supplied to internal flow passages 36 in a pressurized state.

## Description

### [Technical Field]

The present invention relates to a cleaning system for a coating robot.

### [Background Art]

Coating robots that coat vehicles include, for example, ones such as shown in Patent Literature 1. Patent Literature 1 discloses controlling the ejection of coating material from nozzles (12) by driving a piezoelectric type control member (132) to move a needle (122) via a rod (134).

Furthermore, Patent Literature 1 discloses a cleaning station (30) for cleaning the nozzles (12). The cleaning station (30) comprises multiple housings (32), multiple injectors (38) in communication with the housings (32), and a channel (36) to which cleaning fluid is supplied from a hose (40) and which is in communication with the injectors (38). With such a configuration, cleaning of the nozzles (12) including the discharge orifices (127) can be performed.

Furthermore, Patent Literature 2 discloses a configuration that comprises a jet inspection device and a cleaning device (4) and that can perform inspection and cleaning of a print head (1).

### [Prior Art Literature]

### [Patent Literature]

[Patent Literature 1] Japanese Unexamined Patent Application Publication 2020-182933
[Patent Document 2] Japanese Unexamined Patent Application Publication 2022-518341

### [Summary of the Invention]

### [Problem to be Solved by the Invention]

Here, in the configuration disclosed in Patent Literature 1, cleaning of the interior of the nozzle (12) is performed by supplying cleaning fluid from the cleaning station (30). Therefore, it is necessary to provide a dedicated cleaning station (30) having a complex configuration, resulting in a large-scale configuration.

Furthermore, the head (10) disclosed in Patent Literature 1 has a small total number of nozzles (12), namely eight. Therefore, nothing is disclosed regarding cleaning of a type having more numerous nozzles, where the nozzles are arranged in lines in the primary scanning direction and the secondary scanning direction, and having internal flow passages corresponding to the numerous nozzles.

Furthermore, in Patent Literature 2, nothing is disclosed regarding cleaning of a type of head having numerous nozzles, where the nozzles are arranged in lines in the primary scanning direction and the secondary scanning direction, and having internal flow passages corresponding to the numerous nozzles.

The present invention was made based on the above circumstances, and it is an object of the present invention to provide a cleaning system for a coating robot that can improve the cleaning performance with respect to nozzles and internal flow passages of a coating head without requiring large-scale dedicated equipment for cleaning.

### [Means for Solving the Problem]

To solve the aforementioned problem, according to a first aspect of the present invention, there is provided a cleaning system for a coating robot that performs coating on a coating portion of a vehicle, the cleaning system for a coating robot being characterized in that it comprises: a coating head unit comprising a coating head that has a plurality of nozzles that eject droplets of a coating material, arrayed in a primary scanning direction and a secondary scanning direction, and a plurality of internal flow passages for supplying coating material or cleaning fluid to the nozzles; a robot arm which has the coating head unit installed on its distal end and which moves the coating head unit to a desired position; a cap that seals a nozzle forming surface on which the nozzles are exposed; a cap movement mechanism that moves the cap relative to the nozzle forming surface to achieve a sealed state of the nozzle forming surface; a coating material supply passage which supplies the coating material or the cleaning fluid toward the coating head; a return flow passage which is connected to the coating material discharge side of the coating head and which recovers the cleaning fluid or the coating material that was not ejected from the nozzles; a pressurization means which pressurizes the cleaning fluid that is to be supplied toward the coating head in at least one of the coating material supply passage and the return flow passage; and a control means which controls actuation of the pressurization means; wherein the control means controls actuation of the cap movement mechanism so as to seal the nozzle forming surface with the cap; and controls actuation of the pressurization means so that the cleaning fluid is supplied to the internal flow passages in a pressurized state.

### [Effect of the Invention]

According to the present invention, it becomes possible to provide a cleaning system for a coating robot that can improve the cleaning performance with respect to nozzles and internal flow passages of a coating head without requiring large-scale dedicated equipment for cleaning.

### [Brief Description of the Drawings]

[FIG. 1] is a schematic drawing illustrating the overall configuration of a coating robot according to an embodiment of the present invention.
[FIG. 2] is a drawing illustrating a schematic configuration of a cleaning system for the coating robot shown in FIG. 1.
[FIG. 3] is a drawing illustrating, in front view, a nozzle forming surface from which coating material is ejected in the coating head unit provided in the coating robot shown in FIG. 1.
[FIG. 4] is a plan view illustrating a configuration of a nozzle forming surface in another coating head unit different from the coating head unit shown in FIG. 3.
[FIG. 5] is a drawing illustrating a schematic configuration for supplying coating material to the nozzles of the coating head provided in the coating robot shown in FIG. 1.
[FIG. 6] is a drawing illustrating a schematic control configuration centered on the control unit of the cleaning system for the coating robot shown in FIG. 1.
[FIG. 7] is a drawing illustrating a cleaning chart for cleaning the internal flow passages inside the coating head of the coating robot shown in FIG. 1.
[FIG. 8] is a drawing illustrating a schematic configuration of a cleaning system according to a modified example.

### [Modes for Carrying Out the Invention]

A cleaning system 1 for a coating robot 10 according to an embodiment of the present invention will be described below based on the drawings. It should be noted that the cleaning system 1 performs cleaning of a coating system that performs coating by ejecting coating material onto an object to be coated. Therefore, the cleaning system 1 also qualifies as a coating system that performs coating on an object to be coated.

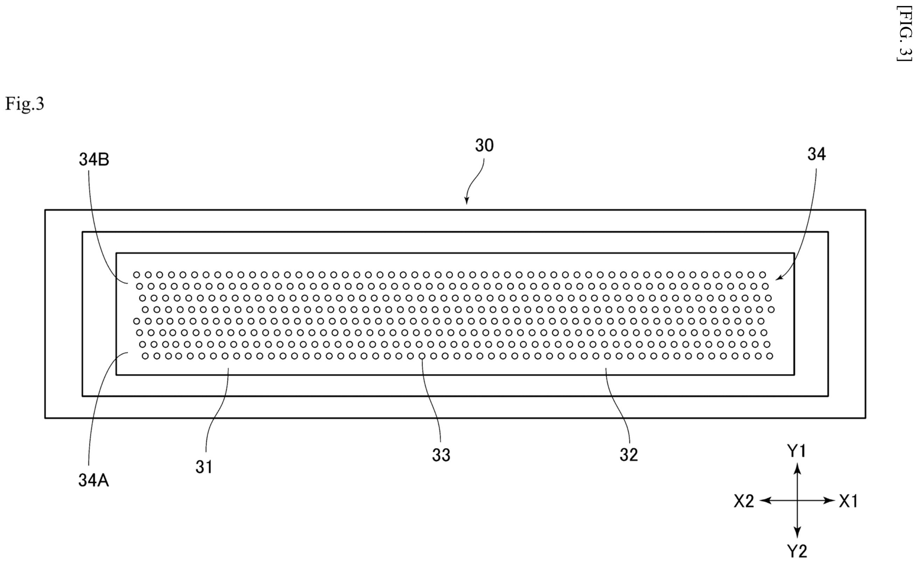

Furthermore, in the following description, as may be necessary, it will be assumed that the X direction is the long direction of the nozzle forming surface 32 (coating head 31), the X1 side is the right side in FIG. 3, and the X2 side is the left side in FIG. 3. Furthermore, it will be assumed that the Y direction is the short direction (width direction) of the nozzle forming surface 32 (coating head 31), the Y1 side is the top side of the page in FIG. 3, and the Y2 side is the bottom side of the page in FIG. 3.

### (1. Overview of the coating robot 10)

The cleaning system 1 of the present embodiment performs "coating" on an object to be coated, such as a vehicle or vehicle component (in the following, a vehicle component constituting a portion of a vehicle will be described as a vehicle) located on a coating line in an automobile manufacturing plant, for the purpose of forming a coating film on the surface of the object to be coated so as to provide protection or improved appearance to that surface. Therefore, such a system needs to perform coating, within a fixed period of time and at a desired coating quality, on vehicles that move along the coating line at predetermined intervals of time.

Furthermore, the cleaning system 1 of the present embodiment can not only form a coating film as described above but can also form various types of designs and images on the object to be coated, such as a vehicle or vehicle component. It should be noted that the object to be coated is not limited to vehicles and vehicle components, and may be anything that needs to be coated, such as various types of non-automobile components (for example, exterior components for airplanes and rail transport).

### (1-1. Overall configuration of the cleaning system 1 of the coating robot 10)

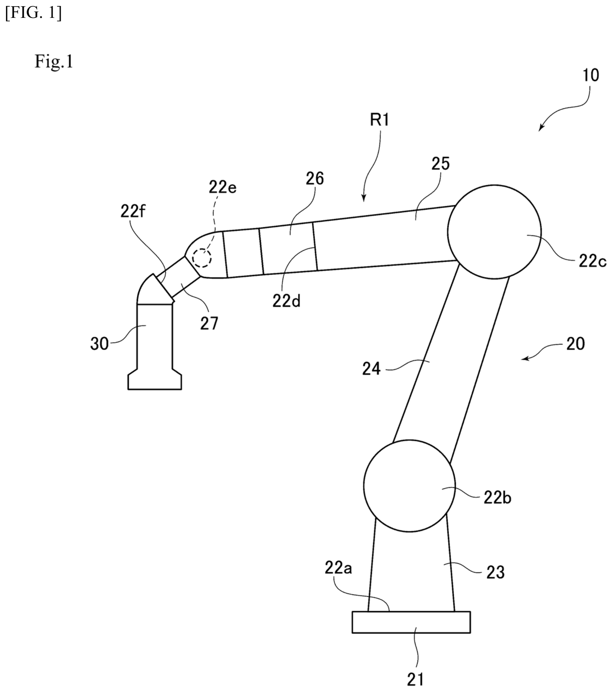

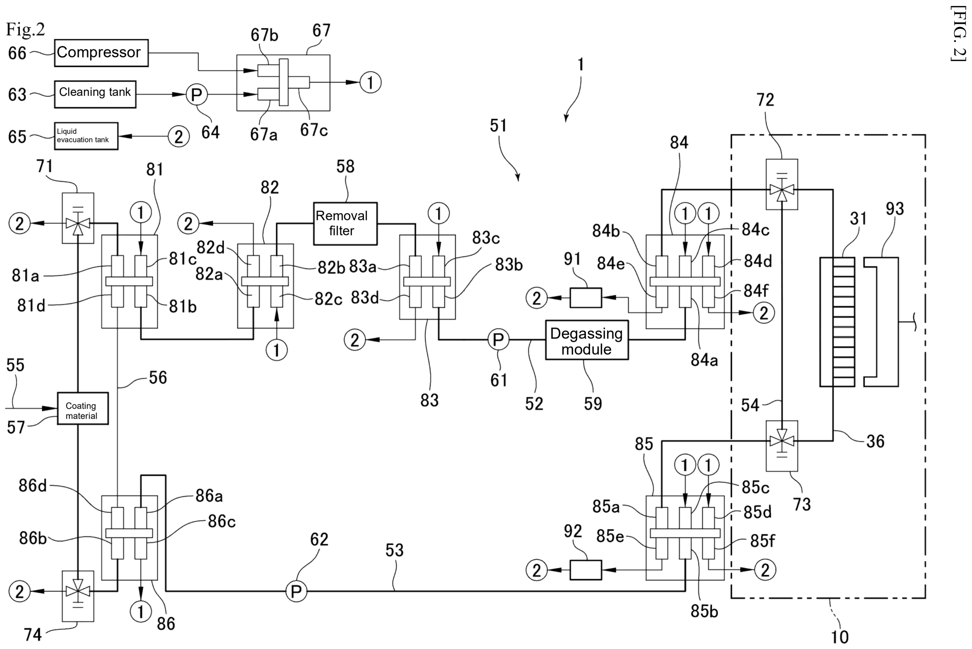

FIG. 1 is a schematic drawing illustrating the overall configuration of a coating robot 10 according to an embodiment of the present invention. FIG. 2 is a drawing illustrating a schematic configuration of the cleaning system 1 of the coating robot 10 shown in FIG. 1. As shown in FIG. 1 and FIG. 2, the cleaning system 1 comprises a coating robot 10 and a coating material supply and cleaning mechanism 50.

### (1-2. Coating robot 10)

As shown in FIG. 1, the coating robot 10 comprises a robot main body 20 and a coating head unit 30 as the main component elements. The coating robot 10 shown in FIG. 1 illustrates, as an example, a six-axis vertical articulated robot, but the coating robot 10 may be any type of robot, such as a vertical articulated type other than six-axis, a horizontal articulated type, a Cartesian coordinate robot, etc.

The robot main body 20 comprises a base 21, first to sixth axes of rotation 22a to 22f, a leg part 23, a first turning arm 24, a second turning arm 25, a rotary arm 26, a wrist part 27, and unillustrated motors for driving these, as the main component elements. It should be noted that the portion from the leg part 23 to the wrist part 27 corresponds to the robot arm R1, but other portions such as the base 21 may also correspond to the robot arm R1.

Among these, the base 21 is a portion which is installed at an installation location such as a floor surface, but this base 21 may also be capable of travel relative to the installation location. Furthermore, the leg part 23 is a portion erected so as to extend upward from the base 21, and is provided so as to be rotatable relative to the base 21 via the first axis of rotation 22a by driving with an unillustrated motor. It should be noted that the leg part 23 may also be configured so as not to rotate relative to the base 21.

Furthermore, at the upper end of the leg part 23, a first turning arm 24 is provided so as to be turnable via the second axis of rotation 22b by driving with an unillustrated motor. Furthermore, on the distal end side of the first turning arm 24, a second turning arm 25 is provided so as to be turnable via a third axis of rotation 22c by driving with an unillustrated motor.

Furthermore, on the distal end side of the second turning arm 25, a rotary arm 26 is provided so as to be rotatable about the central axis of the second turning arm 25. The rotary arm 26 is rotatable via a fourth axis of rotation 22d by driving with an unillustrated motor. Furthermore, on the distal end side of the rotary arm 26, a wrist part 27 is provided. The wrist part 27 enables rotational movement about multiple (for example, two) axes of different orientation by driving with unillustrated motors. In FIG. 1, the axes of rotation about which the rotational movement is possible are designated as the fifth axis of rotation 22e and the sixth axis of rotation 22f, respectively. This makes it possible to control the orientation of the coating head unit 30 with good precision. It should be noted that the number of axes may be any number, provided that it is two or more.

Furthermore, the coating head unit 30 is attached to the wrist part 27, but the coating head unit 30 may also be provided so as to be detachable from the wrist part 27.

### (1-3. Coating head unit 30)

Next, the coating head unit 30 provided in the coating robot 10 will be described. FIG. 3 is a drawing illustrating, in front view, the state of the nozzle forming surface 32 from which coating material is ejected within the coating head 31 of the coating head unit 30. As shown in FIG. 3, the coating head unit 30 comprises an unillustrated head cover, and various components, such as the coating head 31, are housed inside this head cover. It should be noted that the coating head 31 is provided with numerous nozzles 33 for ejecting coating material.

As shown in FIG. 3, on the surface of the coating head 31 on the side that ejects the coating material (the nozzle forming surface 32), opening portions of the multiple nozzles 33 are exposed. It should be noted that in the following description, the opening portions of the nozzles 33 are also referred to as nozzles 33.

Furthermore, on the nozzle forming surface 32, there are provided multiple nozzle rows 34, in which nozzles 33 are arranged in a line tilted relative to the long direction of the coating head unit 30. In the present embodiment, the nozzle rows 34 comprise first nozzle rows 34A that are present on one side (the Y2 side) in the primary scanning direction (the Y direction), and second nozzle rows 34B that are present on the other side (the Y1 side) in the primary scanning direction.

It should be noted that, when ejecting coating material, the drive timing of each of the nozzles 33 is controlled such that droplets ejected from the nozzles 33 of the second nozzle rows 34B will land between the droplets ejected from adjacent nozzles 33 of the first nozzle rows 34A. As a result, the dot density during coating can be increased.

It should be noted that the cap 93, described later, can be brought into contact with the nozzle forming surface 32 so as to create a state in which the nozzle forming surface 32 is sealed from outside. In this state, cleaning operation as described later can be achieved by actuating a first vacuum ejector 91 or a second vacuum ejector 92, described later.

Furthermore, in the configuration shown in FIG. 3, the arrangement of the nozzles 33 in the first nozzle rows 34A and the arrangement of the nozzles 33 in the second nozzle rows 34B are tilted relative to the short direction (the Y direction; the primary scanning direction) of the coating head 31. However, such an arrangement of the nozzles 33 need not be employed. For example, the nozzle rows 34 may also be arranged along the short direction (the Y direction) of the coating head 31. Furthermore, in the short direction (the Y direction; the primary scanning direction) of the coating head 31, the nozzle rows 34 may be a single nozzle row 34 without being divided into the first nozzle rows 34A and the second nozzle rows 34B, or may be divided into three or more nozzle rows.

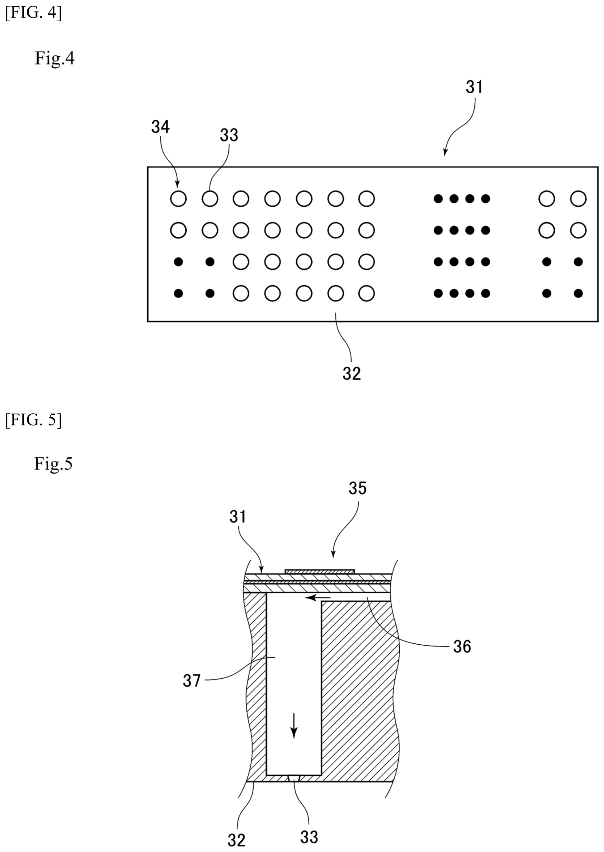

Inside the coating head 31 described above, a flow passage for feeding unillustrated coating material is provided. Furthermore, inside the coating head 31, an unillustrated nozzle pressurization chamber is provided, and on one of the wall surfaces of the nozzle pressurization chamber, a piezoelectric substrate 35 (see FIG. 5) is arranged for changing the volume of the nozzle pressurization chamber so as to eject coating material from the nozzles 33. Therefore, by applying voltage to the piezoelectric substrate 35 from outside, the piezoelectric substrate 35 is made to expand and contract so as to change the volume of the nozzle pressurization chamber, making it possible to eject the coating material from the nozzles 33.

It should be noted that the coating head 31 is not limited to the configuration shown in FIG. 3. For example, as shown in FIG. 4, multiple nozzles 33 may be lined up along the short direction (width direction; Y direction) of the coating head 31 to form the nozzle rows 34. Furthermore, when coating is performed on a vehicle using a coating head 31 as shown in FIG. 4, coating may also be carried out in a state where the long direction of the coating head 31 is slightly tilted relative to the primary scanning direction of the coating head 31.

For example, in the configuration of the coating head 31 shown in FIG. 3, assuming that the nozzle rows 34 are tilted relative to the primary scanning direction by an angle α, the long direction of the coating head 31 in FIG. 4 may also be tilted by an angle α relative to the primary scanning direction of the coating head 31. When tilting in this manner, coating equivalent to that of the coating head 31 shown in FIG. 3 can be achieved simply by adjusting the ejection timing of coating material from each of the nozzles 33.

FIG. 5 is a drawing illustrating the schematic configuration for supplying coating material to each of the nozzles 33 of the coating head 31. As shown in FIG. 5, the coating head 31 has an internal flow passage 36. The internal flow passage 36 is a flow passage that supplies coating material to the nozzle pressurization chamber 37 via a coating material supply passage, described later. It should be noted that FIG. 5 illustrates one internal flow passage 36. However, since numerous nozzles 33 are formed in the coating head 31, the coating head 31 is provided with numerous internal flow passages 36.

Furthermore, nozzle pressurization chambers 37 are provided corresponding to the number of nozzles 33, and the coating material inside can be ejected from the nozzles 33 by driving the piezoelectric substrate 35. Furthermore, the nozzle pressurization chambers 37 are connected to a return flow passage, described later, via internal flow passages inside the coating head 31, such as unillustrated nozzle discharge flow passages. Thus, the coating material that was not ejected from the nozzles 33 is returned to the return flow passage.

With such a configuration, the coating material supplied from a coating material supply passage, described later, passes through the internal flow passages 36 and the nozzle pressurization chambers 37 and is ejected from the nozzles 33. Furthermore, the coating material that was not ejected from the nozzles 33 is returned from the nozzle pressurization chambers 37 through unillustrated internal flow passages to a return flow passage described later.

### (1-4. Regarding the coating material supply and cleaning mechanism 50)

Next, the coating material supply and cleaning mechanism 50 will be described. As shown in FIG. 2, the coating material supply and cleaning mechanism 50 comprises a coating material circulation passage 51, a coating material tank 57, a removal filter 58, a degassing module 59, a supply pump 61, a suction pump 62, a cleaning tank 63, a sending pump 64, a liquid evacuation tank 65, a compressor 66, a cleaning switching valve 67, first to fourth three-way valves 71 to 74, first to sixth switching valves 81 to 86, a first vacuum ejector 91, a second vacuum ejector 92, a cap 93, a cap movement mechanism 94, and other conduits, etc.

The coating material circulation passage 51 is a flow passage for circulating the coating material, and comprises a coating material supply passage 52, a return flow passage 53, a bypass flow passage 54, an external supply passage 55, and a second bypass flow passage 56. The coating material supply passage 52 is a flow passage for supplying the coating material supplied from the external supply passage 55 or returned from the return flow passage 53 toward the coating head 31, and is connected to the internal flow passages 36 inside the coating head 31 described above.

Here, each component element of the coating material supply and cleaning mechanism 50, including the coating material circulation passage 51 described above, is capable of flowing cleaning liquid in addition to coating material, but in the following description, it will be described as simply flowing "coating material".

The return flow passage 53 is connected to the unillustrated internal flow passages inside the coating head 31 described above, and is a flow passage for returning the coating material that was not ejected by the coating head 31 to the coating material tank 57.

Furthermore, the bypass flow passage 54 is a flow passage that connects the coating material supply passage 52 to the return flow passage 53. Namely, the bypass flow passage 54 is provided in parallel to the coating head 31, and when coating material ceases to be ejected from the coating head 31, the operation of the second three-way valve 72 and third three-way valve 73, described later, is switched such that the coating material flows into the bypass flow passage 54.

The external supply passage 55 is a conduit for supplying coating material supplied from the coating material storage area side, such as from a circulation tank, into the coating material tank 57.

The second bypass flow passage 56 is a flow passage connecting the first switching valve 81 and the sixth switching valve 86, and is a flow passage for forming a circulation path including the coating material tank 57 and performing cleaning in this circulation path.

The coating material tank 57 is a part for temporarily storing the coating material supplied from the external supply passage 55. It should be noted that the coating material tank 57 may have a function for removing air bubbles contained in the coating material. This coating material tank 57 is provided, for example, at a stable location outside the robot arm R1 where the attitude will not change. Furthermore, the coating material tank 57 is connected to the coating material supply passage 52 so as to be able to supply coating material thereto, and is connected to the return flow passage 53 so as to be supplied with coating material from the return flow passage 53.

The removal filter 58 removes foreign matter contained in the coating material flowing through the coating material supply passage 52. The removal filter 58 maintains normal operation of the coating head 31 by reliably removing coarse foreign matter and pigment aggregates from, for example, coating material containing pigment. It should be noted that the removal filter 58 is disposed between the second switching valve 82 and the third switching valve 83 in the coating material supply passage 52.

The degassing module 59 is arranged to the downstream side of the removal filter 58, described above, in the coating material supply passage 52, and is a member intended for removal (degassing) of dissolved gas present in solution in the coating material. It should be noted that the degassing module 59 is disposed in the coating material supply passage 52 between the third switching valve 83 and the fourth switching valve 84.

The supply pump 61 is a means for applying positive pressure toward the downstream side of the supply pump 61 to the coating material flowing through the coating material supply passage 52.

It should be noted that a gear pump whereof the rotational speed can be controlled so as to control the coating material supply rate is preferably used as the supply pump 61. In this case, by causing the supply pump 61, which is a gear pump, to rotate in reverse, it becomes possible to cause the coating material or cleaning liquid to flow in reverse. However, a pump other than a gear pump may also be used for the supply pump 61.

The suction pump 62 is a means for applying negative pressure to the upstream side of the suction pump 62 with respect to the coating material flowing through the return flow passage 53.

A gear pump whereof the rotational speed can be controlled so as to control the coating material supply rate is preferably used also as the suction pump 62, just as in the case of the supply pump 61 described above. In this case, by causing the suction pump 62, which is a gear pump, to rotate in reverse, it becomes possible to cause the coating material or cleaning liquid to flow in reverse. However, a pump other than a gear pump may also be used for the suction pump 62.

The cleaning tank 63 is a part that stores cleaning liquid, and is a part that supplies cleaning liquid used when cleaning the various parts of the coating material supply and cleaning mechanism 50 and the coating head 31. The sending pump 64 is a part that draws in the cleaning liquid stored in the cleaning tank 63 and sends out the drawn-in cleaning liquid to the cleaning switching valve 67. It should be noted that the sending pump 64 corresponds to the pressurization means, and corresponds to first pressurization means or second pressurization means according to the switching of the fourth switching valve 84 and the fifth switching valve 85.

Furthermore, the liquid evacuation tank 65 is a part for storing cleaning liquid (evacuated liquid) discharged after cleaning the various parts of the coating material supply and cleaning mechanism 50 and the coating head 31.

The compressor 66 is a part that sends out cleaning air toward the cleaning switching valve 67. Furthermore, the cleaning switching valve 67 comprises a plurality of valve parts including, for example, a valve part 67a to which a flow passage extending from the cleaning tank 63 is connected, a valve part 67b to which a flow passage extending from the compressor 66 is connected, and a valve part 67c to which a flow passage extending to each of the first to sixth switching valves 81 to 86, described later, is connected. These plurality of valve parts are individually controlled to open and close by a cleaning control unit 150, described later. Through such opening and closing control, the cleaning liquid from the cleaning tank 63 and the air from the compressor 66 are alternately sent into the coating material supply passage 52 or the return flow passage 53 in the coating material circulation passage 51.

Furthermore, the first three-way valve 71 is disposed between the coating material tank 57 and the first switching valve 81 in the coating material supply passage 52, and also has connected to it a branch passage (reference numeral omitted) going toward the liquid evacuation tank 65. This first three-way valve 71 can shut off the flow of coating material or cleaning liquid to any one of (a) the coating material tank 57 side, (b) the first switching valve 81 side, and (c) the liquid evacuation tank 65 side. Therefore, coating material or cleaning liquid can flow in the remaining two flow passages that have not been shut off (the same applies to the second to fourth three-way valves 72 to 74 in the following description).

Similarly, the second three-way valve 72 is disposed between the fourth switching valve 84 and the coating head 31, and one end side of the bypass flow passage 54 is furthermore connected thereto. This second three-way valve 72 can shut off flow of coating material or cleaning liquid to any one of (a) the fourth switching valve 84 side, (b) the coating head 31 side, and (c) the bypass flow passage 54 side.

Furthermore, the third three-way valve 73 is disposed between the coating head 31 and the fifth switching valve 85, and the other end side of the bypass flow passage 54 is connected thereto. This third three-way valve 73 can shut off flow of coating material or cleaning liquid to any one of (a) the coating head 31 side, (b) the fifth switching valve 85 side, and (c) the bypass flow passage 54 side.

Furthermore, the fourth three-way valve 74 is disposed between the sixth switching valve 86 and the coating material tank 57, and a branch passage (reference numeral omitted) going toward the liquid evacuation tank 65 is connected thereto. This fourth three-way valve 74 can shut off the flow of coating material or cleaning liquid to any one of (a) the sixth switching valve 86 side, (b) the coating material tank 57 side, and (c) the liquid evacuation tank 65 side.

Furthermore, the first switching valve 81 is disposed between the first three-way valve 71 and the second switching valve 82 in the coating material supply passage 52. This first switching valve 81 has four valve parts 81a to 81d, and can switch the flow passages of liquid (coating material, cleaning liquid) and air (air used during cleaning) according to the open/closed state of these valve parts 81a to 81d. Specifically, the valve part 81a is connected to the upstream side of the coating material supply passage 52, and the valve part 81b is connected to the downstream side of the coating material supply passage 52. Furthermore, the valve part 81c is connected to the cleaning switching valve 67 that can be switchably connected to the cleaning tank 63 or the compressor 66. Furthermore, the valve part 81d is connected to the second bypass flow passage 56 side.

Therefore, when supplying coating material from the coating material tank 57 toward the coating head 31, or when circulating the coating material, the valve part 81a and the valve part 81b are opened, and the coating material from the coating material tank 57 flows to the downstream side of the coating material supply passage 52. Furthermore, during cleaning, when one of the valve parts from among the valve part 81a and the valve part 81b described above and the valve part 81c are opened, the cleaning liquid supplied from the cleaning tank 63 or the air supplied from the compressor 66 flows via the opened valve part to the flow passage connected to the valve part. It should be noted that, in the following description, material including at least one of the cleaning liquid and the air used during cleaning will be described as "cleaning fluid".

Furthermore, the valve part 81d is connected via the second bypass flow passage 56 to a valve part 86d of a sixth switching valve 86, described later, that is arranged in the return flow passage 53. Therefore, for example, by opening the valve part 81a and the valve part 81d, a circulation path is formed in which the upstream side of the coating material supply passage 52 (the side connected to the coating material tank 57), the second bypass flow passage 56, and the downstream side of the return flow passage 53 (the side connected to the coating material tank 57) are connected.

Furthermore, the second switching valve 82 is connected to the coating material supply passage 52 on the downstream side of the first switching valve 81 and on the upstream side of the removal filter 58. This second switching valve 82, just as the first switching valve 81 described above, has four valve parts 82a to 82d, and according to the open/closed state of the valve parts 82a to 82d, the flow passages for liquid (coating material, cleaning liquid) and gas (air used during cleaning) can be switched. Specifically, the valve part 82a is connected to the upstream side of the coating material supply passage 52, and the valve part 82b is connected to the downstream side of the coating material supply passage 52. Furthermore, the valve part 82c is connected to the cleaning switching valve 67 that can be switchably connected to the cleaning tank 63 or the compressor 66. Furthermore, the valve part 82d is connected to the liquid evacuation tank 65 side.

Therefore, when supplying coating material from the coating material tank 57 toward the coating head 31, or when circulating the coating material, the valve part 82a and the valve part 82b are opened, and the coating material from the coating material tank 57 flows to the downstream side of the coating material supply passage 52. Furthermore, during cleaning, when one of the valve parts from among the valve part 82a and the valve part 82b described above and the valve part 82c are opened, the cleaning fluid flows via the opened valve part to the flow passage connected to the valve part.

Furthermore, the third switching valve 83 is connected to the coating material supply passage 52 on the downstream side of the second switching valve 82 and the removal filter 58, and on the upstream side of the degassing module 59. This third switching valve 83, just as the first switching valve 81 described above, has four valve parts 83a to 83d, and according to the open/closed state of the valve parts 83a to 83d, the flow passages for liquid (coating material, cleaning liquid) and gas (air used during cleaning) can be switched. Specifically, the valve part 83a is connected to the upstream side of the coating material supply passage 52, and the valve part 83b is connected to the downstream side of the coating material supply passage 52. Furthermore, the valve part 83c is connected to the cleaning switching valve 67 that can be switchably connected to the cleaning tank 63 or the compressor 66. Furthermore, the valve part 83d is connected to the liquid evacuation tank 65 side.

Therefore, when supplying coating material from the coating material tank 57 toward the coating head 31, or when circulating the coating material, the valve part 83a and the valve part 83b are opened, and the coating material from the coating material tank 57 flows to the downstream side of the coating material supply passage 52. Furthermore, during cleaning, when one of the valve parts from among the valve part 83a and the valve part 83b described above and the valve part 83c are opened, the cleaning fluid flows via the opened valve part to the flow passage connected to the valve part.

Furthermore, the fourth switching valve 84 is connected to the coating material supply passage 52 downstream of the third switching valve 83 and the degassing module 59 and upstream of the second three-way valve 72. Unlike the first switching valve 81 described above, the fourth switching valve 84 has six valve parts 84a to 84f, and the flow passages for liquid (coating material, cleaning liquid) and gas (air used during cleaning) can be switched according to the open/closed state of the valve parts 84a to 84f.

Specifically, the valve part 84a is connected to the upstream side of the coating material supply passage 52, and the valve part 84b is connected to the downstream side of the coating material supply passage 52. Therefore, when the valve part 84a and the valve part 84b are opened, the coating material from the upstream side of the coating material supply passage 52 flows toward the second three-way valve 72 on the downstream side of the coating material supply passage 52. Furthermore, the valve part 84a is also connected to the valve part 84f independently of the valve parts 84b, 84c, and 84e. Therefore, when the valve part 84c or 84e and the valve part 84b are opened and cleaning liquid or air, or coating material is flowing through these valve parts, the valve part 84a can connect with the valve part 84f independently of this flow.

Furthermore, the valve part 84c is connected to the cleaning switching valve 67 that can be switchably connected to the cleaning tank 63 or the compressor 66. Therefore, during cleaning, when the valve part 84a or the valve part 84b described above and the valve part 84c are opened, the cleaning fluid flows via the opened valve parts to the flow passages connected to those valve parts.

Furthermore, the valve part 84d is connected to the cleaning switching valve 67 described above separately and independently from the valve part 84c described above. The flow passage of the valve part 84d is not connected to the valve parts 84b, 84c, and 84e, and is connected only to the valve part 84a and the valve part 84f. For example, when the valve part 84d and the valve part 84f are opened, the cleaning fluid flows to the liquid evacuation tank 65 via the opened valve part 84f.

Furthermore, the valve part 84e is connected to the liquid evacuation tank 65 via the first vacuum ejector 91, described later. Therefore, when one of the valve part 84a or the valve part 84b described above is opened, and the first vacuum ejector 91 is actuated with the valve part 84e in an opened state, the spent cleaning fluid is discharged to the liquid evacuation tank 65 via the valve part 84e and the vacuum ejector 91.

Furthermore, the valve part 84f is also connected to the liquid evacuation tank 65. The flow passage of the valve part 84f is not connected to the valve parts 84b, 84c, and 84e, but is connected to the valve part 84a and the valve part 84d. When the valve part 84a and the valve part 84f are opened, the coating material effluent from the upstream side of the coating material supply passage 52 flows to the liquid evacuation tank 65 via the valve part 84a and the valve part 84f.

Furthermore, the fifth switching valve 85 is connected to the return flow passage 53 downstream of the third three-way valve 73 and upstream of the suction pump 62. Just as the fourth switching valve 84 described above, the fifth switching valve 85 also has six valve parts 85a to 85f, and the flow passages for liquid (coating material, cleaning liquid) and air can be switched according to the open/closed state of the valve parts 85a to 85f.

Specifically, the valve part 85a is connected to the upstream side of the return flow passage 53, and the valve part 85b is connected to the downstream side of the return flow passage 53. Therefore, when the valve part 85a and the valve part 85b are opened, the coating material from the upstream side of the return flow passage 53 flows toward the suction pump 62 on the downstream side of the return flow passage 53. Furthermore, the valve part 85b is connected to the valve part 85f independently of the valve parts 85a, 85c, and 85e. Therefore, when the valve part 85c or 85e and the valve part 85b are opened and the cleaning fluid or coating material is flowed through these valve parts, the valve part 85b can connect to the valve part 85f independently of this flow.

Furthermore, the valve part 85c is connected to the cleaning switching valve 67. Therefore, during cleaning, when one of the valve parts from among the valve part 85a or the valve part 85b described above and the valve part 85c are opened, the cleaning fluid flows via the opened valve part to the flow passage connected to the valve part.

Furthermore, the valve part 85d is connected to the cleaning switching valve 67 separately and independently from the valve part 85c described above. The flow passage of the valve part 85d is not connected to the valve parts 85a, 85c, and 85e, and is connected only to the valve part 85b and the valve part 85f. For example, when the valve part 85d and the valve part 85f are opened, the cleaning fluid flows to the liquid evacuation tank 65 via the opened valve part 85f.

Furthermore, the valve part 85e is connected to the liquid evacuation tank 65 via a second vacuum ejector 92, described later. Therefore, when one of the valve part 85a or the valve part 85b described above is opened, and the second vacuum ejector 92 is actuated with the valve part 85e in an opened state, the spent cleaning fluid is discharged to the liquid evacuation tank 65 via the valve part 85e and the second vacuum ejector 92.

Furthermore, the valve part 85f is connected to the valve parts 85b and 85d and the liquid evacuation tank 65. The flow passage of the valve part 85f is not connected to the valve parts 85a, 85c, and 85e, and is connected to the valve part 85b and the valve part 85d. When the valve part 85b and the valve part 85f are opened, the coating material effluent on the downstream side of the return flow passage 53 flows to the liquid evacuation tank 65 via the valve part 85b and the valve part 85f.

Furthermore, the sixth switching valve 86 is arranged between the suction pump 62 and the fourth three-way valve 74 in the return flow passage 53. The sixth switching valve 86 has four valve parts 86a to 86d, and the flow passages for liquid (coating material, cleaning liquid) and air can be switched according to the open/closed state of the valve parts 86a to 86d. Specifically, the valve part 86a is connected to the upstream side of the return flow passage 53, and the valve part 86b is connected to the downstream side of the return flow passage 53. Furthermore, the valve part 86c is connected to the cleaning switching valve 67 that can be switchably connected to the cleaning tank 63 or the compressor 66. Furthermore, the valve part 86d is connected to the second bypass flow passage 56 side.

Therefore, when supplying the coating material from the coating material tank 57 toward the coating head 31, or when circulating the coating material, the valve part 86a and the valve part 86b are opened, and the coating material from the coating head 31 side (upstream side) flows toward the downstream side of the return flow passage 53. Furthermore, during cleaning, when one of the valve part 86a and the valve part 86b described above and the valve part 86c are opened, the cleaning fluid flows via the opened valve part to the flow passage connected to that valve part.

Furthermore, as described above, the valve part 86d is connected to the valve part 81d of the first switching valve 81 via the second bypass flow passage 56. Therefore, when the valve part 81a and the valve part 81d of the first switching valve 81 are opened, and the valve part 86d and the valve part 86b of the sixth switching valve 86 are opened, the second bypass flow passage 56 connecting the valve part 81d and the valve part 86d opens. As a result, a circulation passage is formed, in which the coating material circulates through the coating material tank 57, the first switching valve 81, the second bypass flow passage 56, and the sixth switching valve 86 in that order.

Furthermore, the first vacuum ejector 91 is arranged in the middle of the conduit connecting the valve part 84e described above and the liquid evacuation tank 65. The first vacuum ejector 91 is a device that discharges fluid by generating a vacuum. When the first vacuum ejector 91 is actuated, if the valve part 84b and the valve part 84e are opened, the coating material or cleaning fluid can be discharged from the coating head 31 side at a predetermined pressure.

Furthermore, the second vacuum ejector 92 is arranged in the middle of the conduit connecting the valve part 85e described above and the liquid evacuation tank 65. The second vacuum ejector 92, similarly to the first vacuum ejector 91 described above, is a device that discharges fluid by generating a vacuum. When the second vacuum ejector 92 has been actuated, if the valve part 85a and the valve part 85e are opened, the coating material or cleaning fluid can be discharged from the coating head 31 side at a predetermined pressure.

It should be noted that the first vacuum ejector 91 and the second vacuum ejector 92 are provided so that the suction force will be sufficiently higher than that of the suction pump 62. More specifically, the actuation of the first vacuum ejector 91 and the second vacuum ejector 92 is controlled by the cleaning control unit 150 so that the negative pressure during suction by the first vacuum ejector 91 and the second vacuum ejector 92 is greater than the negative pressure during suction by the suction pump 62. However, the negative pressure during suction by the first vacuum ejector 91 and the second vacuum ejector 92 may also be approximately the same as or less than the negative pressure during suction by the suction pump 62.

It should be noted that at least one of the first vacuum ejector 91 and the second vacuum ejector 92 corresponds to the suction means. Furthermore, one of either the first vacuum ejector 91 or the second vacuum ejector 92 corresponds to the first suction means, and the other one of either the first vacuum ejector 91 or the second vacuum ejector 92 corresponds to the second suction means.

The cap 93 is a member that establishes tight contact with the nozzle forming surface 32 to seal the nozzle forming surface 32 where the nozzles 33 are exposed. The cap 93 is preferably formed from a flexibly deformable member such as, for example, rubber. Furthermore, the cap 93 may also be configured to form a slight space (internal space) between itself and the nozzle forming surface 32, and to be capable of discharging coating material droplets into the internal space. At this time, it is preferable that the peripheral wall forming the internal space of the cap 93 does not directly contact the location on the nozzle forming surface 32 where the nozzles 33 are formed. Furthermore, it is preferable that a discharge conduit capable of discharging coating material droplets be connected to the cap 93.

Furthermore, the cap movement mechanism 94 is a mechanism for moving the cap 93 described above to seal the nozzle forming surface 32 or to release the seal. The cap movement mechanism 94 may be provided as an independent mechanism comprising a drive source such as a motor or actuator, and a transmission mechanism such as a cam or gear that transmits driving force from the drive source. However, for the cap movement mechanism 94, a robot arm R1 that is capable of moving the coating head 31 (coating head unit 30) relative to the cap 93 may also be used as the cap movement mechanism 94.

### (1-5. Control unit 100)

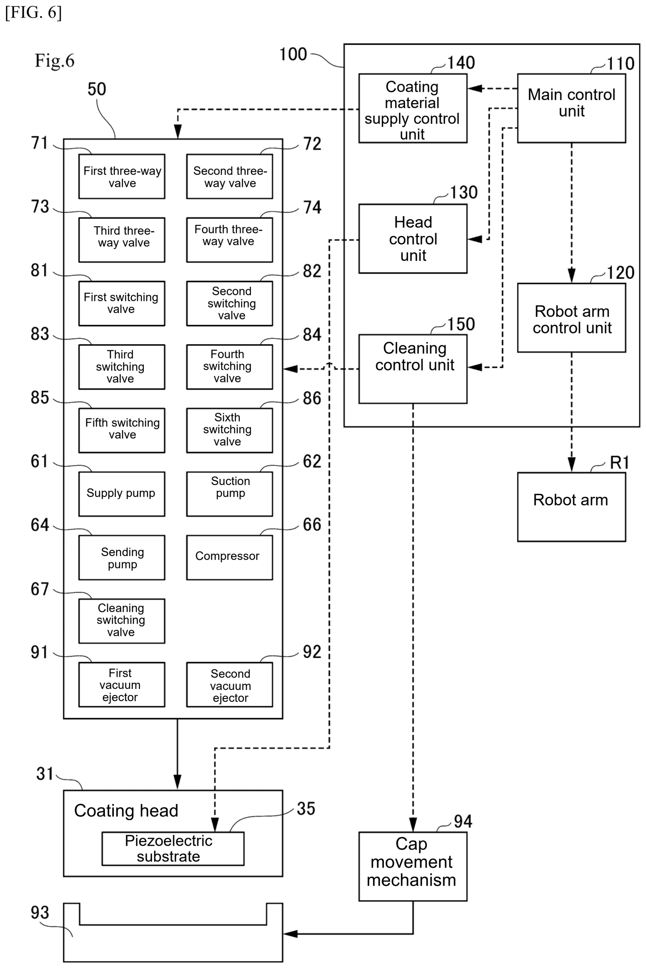

Next, the schematic configuration of the control unit 100 for controlling the operation of the cleaning system 1 of the coating robot 10 will be described. FIG. 6 is a drawing illustrating a schematic control configuration centered on the control unit 100 of the cleaning system 1 of the coating robot 10. As shown in FIG. 6, the control unit 100 comprises a main control unit 110, a robot arm control unit 120, a head control unit 130, a coating material supply control unit 140, and a cleaning control unit 150. It should be noted that at least one of the control unit 100, the main control unit 110, and the cleaning control unit 150 corresponds to the control means.

Among the control elements described above, during execution of coating, the main control unit 110 transmits predetermined control signals to the robot arm control unit 120, the head control unit 130, and the coating material supply control unit 140 described above, as may be necessary, so that coating is executed on the object to be coated through cooperation of each motor of the robot arm R1, each operating part of the coating material supply and cleaning mechanism 50, and the piezoelectric substrate 35.

During execution of cleaning, the main control unit 110 transmits predetermined control signals to the robot arm control unit 120, the head control unit 130, the coating material supply control unit 140, and the cleaning control unit 150 described above, as may be necessary, so that each motor of the robot arm R1, each operating part of the coating material supply and cleaning mechanism 50, and the piezoelectric substrate 35 cooperate to execute coating on the object to be coated.

The robot arm control unit 120 is a part that controls the driving of each motor of the robot arm R1 described above.

The head control unit 130 is a part that controls the actuation of the piezoelectric substrate 35 inside the coating head unit 30 based on image processing by an unillustrated image processing device. Furthermore, the head control unit 130 may also control the actuation of the piezoelectric substrate 35 when executing cleaning inside the coating head 31, as may be necessary.

The coating material supply control unit 140 is a part that controls the supply of coating material to the coating head 31, and specifically controls the operation of each operating element in the coating material supply and cleaning mechanism 50, such as the supply pump 61, the suction pump 62, the first to fourth three-way valves 71 to 74, and the first to sixth switching valves 81 to 86.

The cleaning control unit 150 is a part that controls the actuation of the relevant operating elements when executing cleaning of the internal flow passages 36 inside the coating head 31 and each component element inside the coating material circulation passage 51 with cleaning fluid (cleaning liquid or air). Specifically, the cleaning control unit 150 controls the actuation of each operating element in the coating material supply and cleaning mechanism 50, such as the supply pump 61, the suction pump 62, the sending pump 64, the compressor 66, the cleaning switching valve 67, the first to fourth three-way valves 71 to 74, the first to sixth switching valves 81 to 86, the first vacuum ejector 91, the second vacuum ejector 92, and the cap movement mechanism 94.

### (2. Control during cleaning)

Next, details of the control during cleaning of the internal flow passages 36 inside the coating head 31 will be described.

### (2-1. Forward direction cleaning)

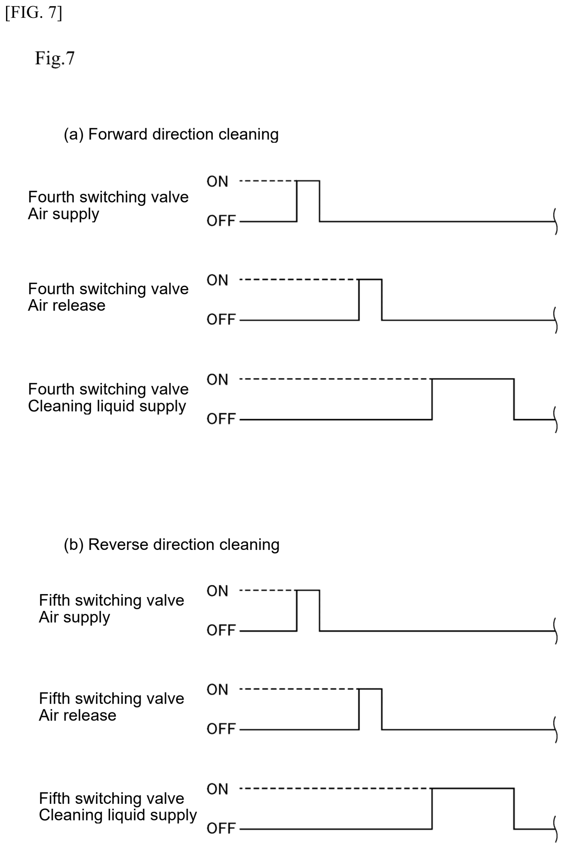

First, forward direction cleaning will be described. FIG. 7 is a diagram showing a cleaning chart for the cleaning of the internal flow passages 36 inside the coating head 31. In this forward direction cleaning, cleaning fluid such as cleaning liquid or air is supplied from the coating material supply passage 52 toward the coating head 31, just as during normal coating. In this case, based on a command from the main control unit 110, the cleaning control unit 150 switches the cleaning switching valve 67 so as to open the valve part 67b while closing the valve part 67a. Furthermore, the cleaning control unit 150 actuates the second three-way valve 72 so as to shut off the flow of cleaning fluid toward the bypass flow passage 54 side, and further actuates the third three-way valve 73 so as to shut off the supply of cleaning fluid from the bypass flow passage 54.

Furthermore, the cleaning control unit 150 actuates the compressor 66 to establish a ready state in which cleaning air can be supplied toward the valve part 67c. Furthermore, separately from the above, the cleaning control unit 150 actuates the cap movement mechanism 94 to bring the cap 93 into tight contact with the nozzle forming surface 32. As a result, the nozzle forming surface 32 (nozzles 33) is sealed from the outside.

After this, the cleaning control unit 150 switches the fourth switching valve 84 so as to open the valve parts 84b and 84c while closing the other valve parts 84a, 84d, 84e, and 84f. Furthermore, the cleaning control unit 150 switches the fifth switching valve 85 so as to open the valve parts 85a and 85e while closing the other valve parts 85b, 85c, 85d, and 85f.

Then, the cleaning air flows via the valve parts 67b, 67c and the valve parts 84b, 84c for a predetermined time period (for example, 0.5 seconds) (air supply ON in FIG. 7(a)). After that, either the valve part 84b or the valve part 84c is shut off so as to shut off the supply of air (air supply OFF in FIG. 7(a)). After this, it is preferable to open the valve part 84e to release the air and adjust the pressure (release ON in FIG. 7(a)). At this time, the pressure of the air is preferably 0.3 to 0.4 bar. However, the pressure may also be outside this range. In particular, when using a coating head 31 provided with high pressure resistance, it is preferable to set the pressure range higher than the above.

Next, the cleaning control unit 150 actuates the sending pump 64 to establish a ready state in which cleaning liquid can be supplied. After this, the cleaning control unit 150 opens the valve parts 84b and 84c while placing the other valve parts 84a, 84d, 84e, and 84f into a closed state, and furthermore switches the cleaning switching valve 67 so as to open the valve part 67a while closing the valve part 67b.

Then, the cleaning liquid flows via the valve parts 67a and 67c and the valve parts 84b and 84c for a predetermined time period (for example, 15 seconds) (supply of cleaning liquid ON in FIG. 7(a)). After that, either the valve part 84b or the valve part 84c is shut off so as to shut off the supply of the cleaning liquid (supply of cleaning liquid OFF in FIG. 7(a)). In this manner, the cleaning liquid is supplied via the coating material supply passage 52 to the internal flow passages 36 of the coating head 31. At this time, the pressure of the cleaning liquid is preferably 0.3 to 0.4 bar. However, the pressure may also be outside this range. In particular, when using a coating head 31 provided with high pressure resistance, it is preferable to set the pressure range higher than the above.

Then, the air or cleaning liquid that has cleaned the internal flow passages 36 is discharged to the liquid evacuation tank 65 via the return flow passage 53 and the valve parts 85a and 85e. For this discharge, the cleaning control unit 150 actuates the second vacuum ejector 92 to discharge the cleaning liquid or air after cleaning to the liquid evacuation tank 65 by negative pressure. It is thereby possible to increase the amount of cleaning liquid or air drawn into the internal flow passages 36.

In this manner, cleaning liquid and air at a predetermined pressure are alternately supplied to the internal flow passages 36 at a predetermined pressure via the coating material supply passage 52. In this way, forward direction cleaning of the internal flow passages 36 is performed. At this time, because the nozzle forming surface 32 (nozzles 33) is sealed by the cap 93, the internal flow passages 36 can be placed in a pressurized state, and cleaning can be executed in that pressurized state.

Furthermore, by actuating the second vacuum ejector 92, even if the return flow passage 53 and the coating material supply passage 52 become longer, it is possible to improve the discharge performance of the spent cleaning fluid compared to a case where the cleaning fluid is discharged only by actuation of the sending pump 64.

In particular, when discharging the spent cleaning fluid via the valve part 85e of the fifth switching valve 85, because the fluid does not go through the suction pump 62, in a configuration that does not use the second vacuum ejector 92 as a comparative example, the only driving element for discharging the spent cleaning fluid is the sending pump 64, and the discharge performance with respect to spent cleaning fluid tends to decrease.

However, as described above, by providing the second vacuum ejector 92 and discharging the spent cleaning fluid by actuation of the second vacuum ejector 92 in addition to actuation of the sending pump 64, the discharge performance with respect to cleaning fluid after cleaning can be improved compared to the case where only the sending pump 64 is actuated. Namely, during forward direction cleaning, this makes it possible to suppress decrease in cleaning performance and increase in cleaning time of the coating material circulation passage 51 even if the return flow passage 53 and the coating material supply passage 52 become longer.

It should be noted that, if the forward direction cleaning of the internal flow passages 36 using air and cleaning liquid as described above is taken as one cycle, it is preferable to repeat such a cleaning cycle two or more times.

### (2-2. Reverse direction cleaning)

Next, reverse direction cleaning will be described. In this reverse direction cleaning, cleaning fluid such as cleaning liquid and air is supplied to the coating head 31 in the reverse direction compared to the forward direction cleaning described above. In this case, based on a command from the main control unit 110, the cleaning control unit 150 switches the cleaning switching valve 67 so as to open the valve part 67b while closing the valve part 67a. Furthermore, the cleaning control unit 150 actuates the second three-way valve 72 so as to shut off the flow of cleaning fluid toward the bypass flow passage 54 side, and further actuates the third three-way valve 73 so as to shut off the supply of cleaning fluid from the bypass flow passage 54.

Furthermore, the cleaning control unit 150 actuates the compressor 66 to establish a ready state in which cleaning air can be supplied toward the valve part 67c. Furthermore, separately from the above, the cleaning control unit 150 actuates the cap movement mechanism 94 to bring the cap 93 into tight contact with the nozzle forming surface 32. As a result, the nozzle forming surface 32 (nozzles 33) is sealed from the outside.

After this, the cleaning control unit 150 switches the fifth switching valve 85 so as to open the valve parts 85a and 85c while closing the other valve parts 85b, 85d, 85e, and 85f. Furthermore, the cleaning control unit 150 switches the fourth switching valve 84 so as to open the valve parts 84b and 84e while closing the other valve parts 84a, 84c, 84d, and 84f.

Then, the cleaning air flows via the valve parts 67b and 67c and the valve parts 85a and 85c for a predetermined time period (for example, 0.5 seconds) (air supply ON in FIG. 7(b)). After that, either the valve part 85a or the valve part 85c is shut off so as to shut off the supply of the air (air supply OFF in FIG. 7(b)). After this, it is preferable to open the valve part 85e to release the air and adjust the pressure (release ON in FIG. 7(b)).

Next, the cleaning control unit 150 actuates the sending pump 64 to establish a ready state in which cleaning liquid can be supplied. After this, the cleaning control unit 150 switches the cleaning switching valve 67 so as to open the valve part 67a while closing the valve part 67b in a state in which the valve parts 85a and 85c are open while the other valve parts 85b, 85d, 85e, and 85f are closed.

Then, the cleaning liquid flows via the valve parts 67a and 67c and the valve parts 85a and 85c for a predetermined time period (for example, 15 seconds) (cleaning liquid supply ON in FIG. 7(b)). After that, either the valve part 85a or the valve part 85c is shut off so as to shut off the supply of the cleaning liquid (cleaning liquid supply OFF in FIG. 7(b)). In this manner, the cleaning liquid is supplied via the coating material supply passage 52 to the internal flow passages 36 of the coating head 31.

Then, the air or cleaning liquid that has cleaned the internal flow passages 36 is discharged to the liquid evacuation tank 65 via the coating material supply passage 52 and the valve parts 84b and 84e. In this discharge, the cleaning control unit 150 actuates the first vacuum ejector 91 to discharge the cleaning liquid or air after cleaning to the liquid evacuation tank 65 by negative pressure. It is thereby possible to increase the amount of cleaning liquid or air drawn into the internal flow passages 36.

In this manner, cleaning liquid and air at a predetermined pressure are alternately supplied to the internal flow passages 36 at a predetermined pressure via the return flow passage 53. In this way, reverse direction cleaning of the internal flow passages 36 is performed. At this time, because the nozzle forming surface 32 (nozzles 33) is sealed by the cap 93, the internal flow passages 36 can be placed in a pressurized state, and cleaning can be executed in that pressurized state.

Furthermore, as described above, in addition to the actuation of the sending pump 64, by also discharging the spent cleaning fluid through the actuation of the first vacuum ejector 91, the discharge performance of the cleaning fluid after cleaning can be improved as compared to the case where only the sending pump 64 is actuated. Namely, during reverse direction cleaning, this makes it possible to suppress decrease in cleaning performance of the coating material circulation passage 51 and increase in cleaning time even if the return flow passage 53 or the coating material supply passage 52 becomes longer.

It should be noted that, if the reverse direction cleaning of the internal flow passages 36 using air and cleaning liquid as described above is taken as one cycle, it is preferable to repeat such a cleaning cycle two or more times.

### (3. Modified examples)

### (3-1. Cleaning when there is one vacuum ejector)

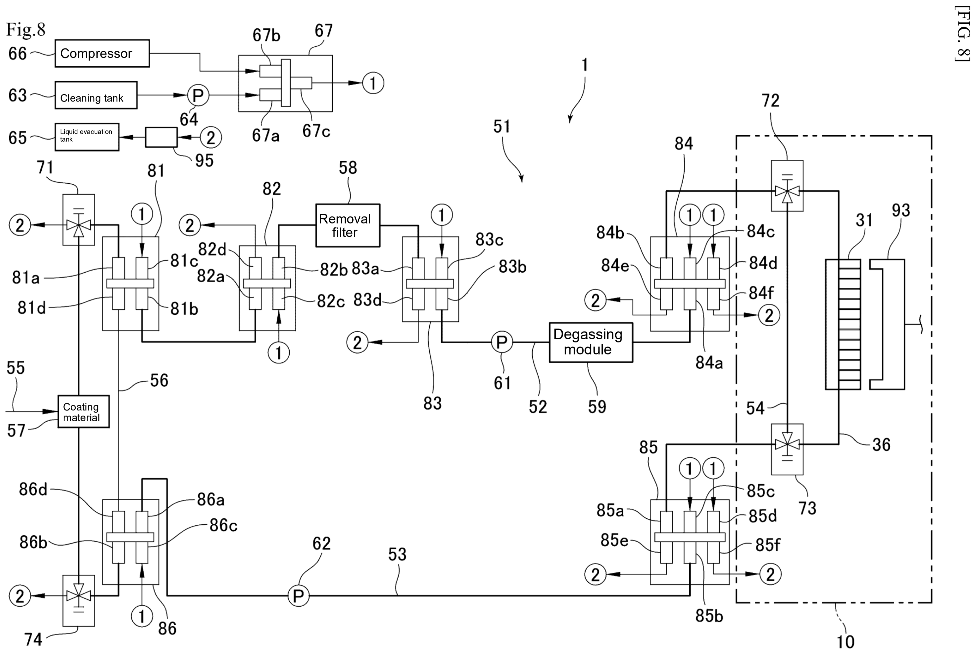

In the embodiment described above, two vacuum ejectors, the first vacuum ejector 91 and the second vacuum ejector 92, are used as the vacuum ejector. However, it is also possible to perform forward direction cleaning and reverse direction cleaning using one vacuum ejector. In this case, it is possible to perform cleaning individually for each cleaning target section. Hereinafter, this case will be described based on FIG. 8. It should be noted that in FIG. 8, the description will refer to the one vacuum ejector as vacuum ejector 95. Here, the vacuum ejector 95 corresponds to a cleaning suction means, and also corresponds to one of either the first cleaning suction means or the second cleaning suction means. However, the first to sixth switching valves 81 to 86 may be included in the cleaning suction means, or in any one of either the first cleaning suction means or the second cleaning suction means.

### (3-1a. Forward direction cleaning)

First, forward direction cleaning will be described. Here, a case will be described where the cleaning target is the internal flow passages 36 of the coating head 31, the coating material supply passage 52 going toward the internal flow passages 36, and the first section of the return flow passage 53 through which the cleaning fluid discharged from the internal flow passages 36 flows. First, the cleaning control unit 150 controls the actuation of the first to third three-way valves 71 to 73, the compressor 66, the cleaning switching valve 67, and the cap movement mechanism 94 in the same manner as in the embodiment described above. After this, the fourth switching valve 84 is switched so as to open the valve parts 84b and 84c while closing the other valve parts 84a, 84d, 84e, and 84f. Furthermore, the cleaning control unit 150 switches the fifth switching valve 85 so as to open the valve parts 85a and 85e while closing the other valve parts 85b, 85c, 85d, and 85f.

It should be noted that the details of the subsequent cleaning are the same as in the case of "2-1. Forward direction cleaning" described above, so description of the details will be omitted.

Then, the air or cleaning liquid that has cleaned the internal flow passages 36 is discharged to the liquid evacuation tank 65 via the return flow passage 53 and the valve parts 85a and 85e. In this discharge, the cleaning control unit 150 actuates the vacuum ejector 95 to discharge the cleaning liquid or air after cleaning to the liquid evacuation tank 65 by negative pressure. In this way, compared to the case where the suction pump 62 is actuated, it is possible to increase the amount of cleaning liquid or air drawn into the internal flow passages 36.

Here, the cleaning control unit 150 may, for example, actuate the cap movement mechanism 94 to adjust the state of tight contact of the cap 93 with respect to the nozzle forming surface 32, and further control the actuation of the vacuum ejector 95 to change the negative pressure due to the actuation of the vacuum ejector 95, thereby making variable the ratio between the amount of the cleaning fluid flowing through the internal flow passages 36 that is ejected from the nozzles 33 and the amount that passes through the internal flow passages 36 without being ejected from the nozzles 33.

That is, in a state where the cap 93 is not in complete tight contact with the nozzle forming surface 32, the cleaning fluid will leak out from the nozzles 33 to a predetermined extent. In this leaking state, if the negative pressure due to the actuation of the vacuum ejector 95 changes, the amount of cleaning fluid leaking out from the nozzles 33 can be adjusted to an appropriate ratio. Therefore, in cases where it is preferable to directly discharge foreign matter from the nozzles 33 using the cleaning fluid, this can be accommodated by adjusting the amount of cleaning fluid ejected from the nozzles 33.

In the above manner, cleaning liquid and air at a predetermined pressure are alternately supplied to the internal flow passages 36 at a predetermined pressure via the coating material supply passage 52. In this way, forward direction cleaning of the internal flow passages 36 is performed. At this time, because the nozzle forming surface 32 (nozzles 33) is sealed by the cap 93, the internal flow passages 36 can be placed in a pressurized state, and cleaning can be executed in that pressurized state.

Furthermore, by actuating the vacuum ejector 95, even if the return flow passage 53 and the coating material supply passage 52 become longer, it is possible to improve the discharge performance of the spent cleaning fluid compared to a case where the cleaning fluid is discharged only by actuation of the sending pump 64.

In particular, when discharging the spent cleaning fluid via the valve part 85e of the fifth switching valve 85, because the fluid does not go through the suction pump 62, in a configuration that does not use the vacuum ejector 95 as a comparative example, the only driving element for discharging the spent cleaning fluid is the sending pump 64, and the discharge performance with respect to spent cleaning fluid tends to decrease.

However, as described above, by providing the vacuum ejector 95 and discharging the spent cleaning fluid by actuation of the vacuum ejector 95 in addition to actuation of the sending pump 64, the discharge performance with respect to cleaning fluid after cleaning can be improved compared to the case where only the sending pump 64 is actuated. Namely, during forward direction cleaning, this makes it possible to suppress decrease in cleaning performance and increase in cleaning time of the coating material circulation passage 51 even if the return flow passage 53 and the coating material supply passage 52 become longer.

It should be noted that, if the forward direction cleaning of the internal flow passages 36 using air and cleaning liquid as described above is taken as one cycle, it is preferable to repeat such a cleaning cycle two or more times.

Furthermore, in the case where the cleaning target is a second section that includes the degassing module 59 in addition to the first section in which the main cleaning target is the internal flow passages 36 as described above, the cleaning control unit 150 switches the third switching valve 83 so as to open the valve parts 83b and 83c while closing the other valve parts 83a and 83d. Furthermore, the cleaning control unit 150 switches the fourth switching valve 84 so as to open the valve parts 84a and 84b while closing the other valve parts 84c, 84d, 84e, and 84f. Furthermore, the cleaning control unit 150 switches the fifth switching valve 85 so as to open the valve parts 85a and 85e while closing the other valve parts 85b, 85c, 85d, and 85f.

It should be noted that the details of the cleaning thereafter are the same as in the case of the first section described above, and therefore description of the details will be omitted.

Furthermore, in the case where the cleaning target is a third section that includes the removal filter 58 in addition to the second section in which the main cleaning target is the internal flow passages 36 and the degassing module 59 as described above, the second switching valve 82 is switched so as to open the valve parts 82b and 82c while closing the other valve parts 82a and 82d. Furthermore, the cleaning control unit 150 switches the third switching valve 83 so as to open the valve parts 83a and 83b while closing the other valve parts 83c and 83d. Furthermore, the cleaning control unit 150 switches the fourth switching valve 84 so as to open the valve parts 84a and 84b while closing the other valve parts 84c, 84d, 84e, and 84f. Furthermore, the cleaning control unit 150 switches the fifth switching valve 85 so as to open the valve parts 85a and 85e while closing the other valve parts 85b, 85c, 85d, and 85f.

It should be noted that the details of the cleaning thereafter are the same as in the case of the first section described above, and therefore description of the details will be omitted.

Furthermore, in the case where the cleaning target is a fourth section that also includes the coating material supply passage 52 between the first switching valve 81 and the second switching valve 82 in addition to the third section in which the main cleaning target is the internal flow passages 36, the degassing module 59, and the removal filter 58 as described above, the first switching valve 81 is switched so as to open the valve parts 81b and 81c while closing the other valve parts 81a and 81d. Furthermore, the cleaning control unit 150 switches the second switching valve 82 so as to open the valve parts 82a and 82b while closing the other valve parts 82c and 82d. Furthermore, the cleaning control unit 150 switches the third switching valve 83 so as to open the valve parts 83a and 83b while closing the other valve parts 83c and 83d. Furthermore, the cleaning control unit 150 switches the fourth switching valve 84 so as to open the valve parts 84a and 84b while closing the other valve parts 84c, 84d, 84e, and 84f. Furthermore, the cleaning control unit 150 switches the fifth switching valve 85 so as to open the valve parts 85a and 85e while closing the other valve parts 85b, 85c, 85d, and 85f.

It should be noted that the details of the cleaning thereafter are the same as in the case of the first section described above, and therefore description of the details will be omitted.

### (3-1b. Reverse direction cleaning)

Next, reverse direction cleaning will be described. In this reverse direction cleaning, cleaning fluid such as cleaning liquid and air is supplied to the coating head 31 in the reverse direction compared to the forward direction cleaning described above. Here, a case will be described where the cleaning target is the internal flow passages 36 of the coating head 31, the coating material supply passage 52 going toward the internal flow passages 36, and the first section of the return flow passage 53 through which the cleaning fluid discharged from the internal flow passages 36 flows. First, the cleaning control unit 150 controls the actuation of the first to third three-way valves 71 to 73, the compressor 66, the cleaning switching valve 67, and the cap movement mechanism 94 in the same manner as in the embodiment described above. After this, the cleaning control unit 150 switches the fifth switching valve 85 so as to open the valve parts 85a and 85c while closing the other valve parts 85b, 85d, 85e, and 85f. Furthermore, the cleaning control unit 150 switches the fourth switching valve 84 so as to open the valve parts 84b and 84e while closing the other valve parts 84a, 84c, 84d, and 84f.

It should be noted that the details of the subsequent cleaning are the same as in the case of "2-2. Reverse direction cleaning" described above, so description of the details thereof will be omitted.

Then, the air or cleaning liquid that has cleaned the internal flow passages 36 is discharged to the liquid evacuation tank 65 via the coating material supply passage 52 and the valve parts 84b and 84e. In this discharge, the cleaning control unit 150 actuates the vacuum ejector 95 to discharge the cleaning liquid or air after cleaning to the liquid evacuation tank 65 by negative pressure. It is thereby possible to increase the amount of cleaning liquid or air drawn into the internal flow passages 36.

In this manner, air at a predetermined pressure and cleaning liquid are alternately supplied to the internal flow passages 36 at a predetermined pressure via the return flow passage 53. In this way, reverse direction cleaning of the internal flow passages 36 is performed. At this time, because the nozzle forming surface 32 (nozzles 33) is sealed by the cap 93, the internal flow passages 36 can be placed in a pressurized state, and cleaning can be executed in that pressurized state.

Furthermore, as described above, by providing the vacuum ejector 95 and discharging the spent cleaning fluid by actuation of the vacuum ejector 95 in addition to actuation of the sending pump 64, the discharge performance with respect to cleaning fluid after cleaning can be improved compared to the case where only the sending pump 64 is actuated. Namely, during reverse direction cleaning, this makes it possible to suppress decrease in cleaning performance of the coating material circulation passage 51 and increase in cleaning time even if the return flow passage 53 or the coating material supply passage 52 becomes longer.

It should be noted that, if the reverse direction cleaning of the internal flow passages 36 using air and cleaning liquid as described above is taken as one cycle, it is preferable to repeat such a cleaning cycle two or more times.

Furthermore, when the cleaning target is a second section that includes the degassing module 59 in addition to the first section in which the main cleaning target is the internal flow passages 36 as described above, and reverse direction cleaning is to be performed thereon, the cleaning control unit 150 switches the fifth switching valve 85 so as to open the valve parts 85a and 85c while closing the other valve parts 85b, 85d, 85e, and 85f, in the same manner as described above. Furthermore, the cleaning control unit 150 switches the fourth switching valve 84 so as to open the valve parts 84a and 84b while closing the other valve parts 84c, 84d, 84e, and 84f. Furthermore, the cleaning control unit 150 switches the third switching valve 83 so as to open the valve parts 83b and 83d while closing the other valve parts 83a and 83c.

It should be noted that the details of the cleaning thereafter are the same as in the case of the first section described above, and therefore description of the details will be omitted.

Furthermore, when the cleaning target is a third section further including the removal filter 58 in addition to the second section in which the main cleaning target is the internal flow passages 36 and the degassing module 59 as described above, and reverse direction cleaning is to be performed thereon, the cleaning control unit 150 switches the fifth switching valve 85 so as to open the valve parts 85a and 85c while closing the other valve parts 85b, 85d, 85e, and 85f, in the same manner as described above. Furthermore, the cleaning control unit 150 switches the fourth switching valve 84 so as to open the valve parts 84a and 84b while closing the other valve parts 84c, 84d, 84e, and 84f. Furthermore, the cleaning control unit 150 switches the third switching valve 83 so as to open the valve parts 83a and 83b while closing the other valve parts 83c and 83d. Furthermore, the cleaning control unit 150 switches the second switching valve 82 so as to open the valve parts 82b and 82d while closing the other valve parts 82a and 82c.

It should be noted that the details of the cleaning thereafter are the same as in the case of the first section described above, and therefore description of the details will be omitted.

Furthermore, when the cleaning target is a fourth section in which the cleaning target further includes the coating material supply passage 52 between the first switching valve 81 and the second switching valve 82 in addition to the third section in which the main cleaning target is the internal flow passages 36, the degassing module 59 and the removal filter 58 as described above, and reverse direction cleaning is to be performed thereon, the cleaning control unit 150 switches the fifth switching valve 85 so as to open the valve parts 85a and 85c while closing the other valve parts 85b, 85d, 85e, and 85f, in the same manner as described above. Furthermore, the cleaning control unit 150 switches the fourth switching valve 84 so as to open the valve parts 84a and 84b while closing the other valve parts 84c, 84d, 84e, and 84f. Furthermore, the cleaning control unit 150 switches the third switching valve 83 so as to open the valve parts 83a and 83b while closing the other valve parts 83c and 83d. Furthermore, the cleaning control unit 150 switches the second switching valve 82 so as to open the valve parts 82a and 82b while closing the other valve parts 82c and 82d. Furthermore, the cleaning control unit 150 switches the first switching valve 81 so as to open the valve parts 81a and 81b while closing the other valve parts 81c and 81d. Furthermore, the cleaning control unit 150 switches the first three-way valve 71 such that the cleaning fluid flows toward the liquid evacuation tank 65 side while the cleaning fluid does not flow toward the coating material tank 57 side.

It should be noted that the details of the cleaning thereafter are the same as in the case of the first section described above, and therefore description of the details will be omitted.

### (3-2. Discharge of cleaning fluid after cleaning from locations other than the fifth switching valve 85)

In the forward direction cleaning described above, the cleaning fluid after cleaning is discharged from the valve part 85e of the fifth switching valve 85 toward the liquid evacuation tank 65. However, the cleaning fluid after cleaning may be discharged toward the liquid evacuation tank 65 after passing through at least the sixth switching valve 86.

In this case, the cleaning control unit 150 switches the fifth switching valve 85 so as to, for example, open the valve parts 85a and 85b and close the other valve parts 85c, 85d, 85e, and 85f. Furthermore, the cleaning control unit 150 switches the sixth switching valve 86 so as to open the valve parts 86a and 86b and close the other valve parts 86c and 86d. Furthermore, the cleaning control unit 150 switches the fourth three-way valve 74 such that the cleaning fluid flows toward the liquid evacuation tank 65 side while the cleaning fluid does not flow toward the coating material tank 57 side.

In this case, cleaning can be performed by causing the cleaning fluid to flow also in the return flow passage 53 between the fifth switching valve 85 and the sixth switching valve 86. Furthermore, since the cleaning fluid passes through the suction pump 62, by actuating the suction pump 62 in addition to the sending pump 64 (or the vacuum ejector 95), the cleaning fluid after cleaning can be discharged even more favorably toward the liquid evacuation tank 65, and it becomes possible to further suppress decrease in cleaning performance and increase in cleaning time of the coating material circulation passage 51.

Furthermore, as another example going through at least the sixth switching valve 86, the cleaning control unit 150 switches the fifth switching valve 85 so as to open the valve parts 85a and 85b and close the other valve parts 85c, 85d, 85e, and 85f, for example. Furthermore, the cleaning control unit 150 switches the sixth switching valve 86 so as to open the valve parts 86a and 86d and close the other valve parts 86b and 86c. Furthermore, the cleaning control unit 150 switches the first switching valve 81 so as to open the valve parts 81a and 81d and close the other valve parts 81b and 81c. Furthermore, the cleaning control unit 150 switches the first three-way valve 71 such that the cleaning fluid flows toward the liquid evacuation tank 65 side while the cleaning fluid does not flow toward the coating material tank 57 side.

In this case, cleaning can be performed by causing the cleaning fluid to flow also in the return flow passage 53 between the fifth switching valve 85 and the sixth switching valve 86. Furthermore, it becomes possible to perform cleaning by flowing the cleaning fluid also into the second bypass flow passage 56.

### (3-3. Supply of cleaning fluid from other than the fifth switching valve 85)

Furthermore, in the reverse direction cleaning described above, the cleaning fluid is supplied through the valve part 85c of the fifth switching valve 85. However, the cleaning fluid may also be supplied through the valve part 85c of the sixth switching valve 86.

In this case, the cleaning control unit 150 switches the sixth switching valve 86 so as to open the valve parts 86a and 86c and close the other valve parts 86b and 86d, for example. Furthermore, the cleaning control unit 150 switches the fifth switching valve 85 so as to open the valve parts 85a and 85b and close the other valve parts 85c, 85d, 85e, and 85f.

In this case, cleaning can be performed by causing the cleaning fluid to flow also in the return flow passage 53 between the fifth switching valve 85 and the sixth switching valve 86.

### (3-4. Supply of cleaning fluid via the first switching valve 81, the second bypass flow passage 56, and the sixth switching valve 86)

Furthermore, in the reverse direction cleaning, the cleaning control unit 150 may supply cleaning fluid such as cleaning liquid or air through the first switching valve 81, and further supply the cleaning fluid to the internal flow passages 36 from the return flow passage 53 side via the second bypass flow passage 56 and the sixth switching valve 86.

At this time, the first switching valve 81 is switched so as to open the valve parts 81c and 81d while closing the other valve parts 81a and 81b. Furthermore, the sixth switching valve 86 is switched so as to open the valve parts 86a and 86d of the sixth switching valve 86 while closing the other valve parts 86b and 86c. Furthermore, the fifth switching valve 85 is switched so as to open the valve parts 85a and 85b of the fifth switching valve 85 while closing the other valve parts 85c, 85d, 85e, and 85f. As a result, the cleaning fluid is supplied from the return flow passage 53 to the internal flow passages 36 via the first switching valve 81, the second bypass flow passage 56, the sixth switching valve 86, and the fifth switching valve 85.

It should be noted that the discharge of the cleaning fluid on the coating material supply passage 52 side is performed by switching the second to fourth switching valves 82 to 84 so as to discharge the cleaning fluid from at least one of the second to fourth switching valves 82 to 84. Specifically, when switching the second switching valve 82, actuation is controlled so as to open the valve parts 82b and 82d while closing the other valve parts 82a and 82c. Furthermore, when switching the third switching valve 83, actuation is controlled so as to open the valve parts 83b and 83d while closing the other valve parts 83a and 83c. Furthermore, when switching the fourth switching valve 84, actuation is controlled so as to open the valve parts 84b and 84e while closing the other valve parts 84a, 84c, 84d, and 84f.

In this manner, in the reverse direction cleaning, when the cleaning fluid such as cleaning liquid or air is supplied through the first switching valve 81, and the cleaning fluid is further supplied to the internal flow passages 36 from the return flow passage 53 side via the second bypass flow passage 56 and the sixth switching valve 86, it becomes possible to clean the return flow passage 53 together with the coating head 31.

### (3-5. Supply of cleaning fluid via first switching valve 81, coating material tank 57, and sixth switching valve 86)

Furthermore, in the reverse direction cleaning, the cleaning control unit 150 may supply the cleaning fluid such as cleaning liquid or air through the first switching valve 81, and further supply the cleaning fluid to the internal flow passages 36 from the return flow passage 53 side via the coating material tank 57 and the sixth switching valve 86.

At this time, the first switching valve 81 is switched so as to open the valve parts 81a and 81c while closing the other valve parts 81b and 81d. Furthermore, the first three-way valve 71 is switched so that the cleaning fluid flows toward the coating material tank 57 side while the cleaning fluid does not flow toward the liquid evacuation tank 65 side. Furthermore, the fourth three-way valve 74 is switched so that the cleaning fluid flows toward the sixth switching valve 86 side while the cleaning fluid does not flow toward the liquid evacuation tank 65 side.

Furthermore, the sixth switching valve 86 is switched so as to open the valve parts 86a and 86b of the sixth switching valve 86 while closing the other valve parts 86d and 86c. Furthermore, the fifth switching valve 85 is switched so as to open the valve parts 85a and 85b of the fifth switching valve 85 while closing the other valve parts 85c, 85d, 85e, and 85f. As a result, the cleaning fluid is supplied from the return flow passage 53 to the internal flow passages 36 via the first switching valve 81, the coating material tank 57, the sixth switching valve 86, and the fifth switching valve 85.

It should be noted that the discharge of the cleaning fluid on the coating material supply passage 52 side is the same as in the case of the supply of the cleaning fluid via the first switching valve 81, the second bypass flow passage 56, and the sixth switching valve 86 described above, and therefore description of the discharge will be omitted.

With such reverse direction cleaning, it becomes possible to clean the return flow passage 53 together with the coating head 31. Furthermore, it also becomes possible to clean the coating material tank 57.

### (3-6. Variation of pressure applied by the cap 93)

In the embodiment or modified example described above, when executing at least one cleaning operation from among the forward direction cleaning and the reverse direction cleaning under the control of the cleaning control unit 150, the cap movement mechanism 94 may be actuated to vary the sealing pressure applied by the cap 93 to the nozzle forming surface 32 and the internal flow passages 36. Furthermore, the pressure on the nozzle forming surface 32 and in the internal flow passages 36 may be varied by releasing the sealed state of the nozzle forming surface 32 effected by the cap 93 and then resealing it.

By generating such pressure variation, it becomes possible to improve discharge performance with respect to foreign matter in the internal flow passages 36.

### (3-7. Other modified examples)

Furthermore, in the embodiment described above, the sending pump 64 corresponds to the pressurization means, but another member may also be used as the pressurization means instead of the sending pump 64. For example, when the cleaning liquid or air is supplied from the upstream side of the supply pump 61, the supply pump 61 may correspond to the pressurization means.

Furthermore, in the embodiment described above, the first vacuum ejector 91 and the second vacuum ejector 92 correspond to the cleaning suction means, but another member may be used as the suction means instead of these. For example, when the cleaning liquid or air is supplied from the upstream side of the return flow passage 53 relative to the suction pump 62, the suction pump 62 may correspond to the pressurization means. Furthermore, as the cleaning suction means, instead of at least one of the first vacuum ejector 91 and the second vacuum ejector 92, a pump similar to the suction pump may be connected to the valve part 84e or may be connected to the valve part 85e.

### (4. Supplementary notes)

The content set forth in the embodiments described above may be understood, for example, as follows.
[1] Namely,
   A cleaning system 1 for a coating robot 10 that performs coating on a coating portion of a vehicle, comprising:
   a coating head unit 30 comprising a coating head 31 that has a plurality of nozzles 33 that eject droplets of a coating material, arrayed in a primary scanning direction and a secondary scanning direction, and a plurality of internal flow passages 36 for supplying the coating material or the cleaning fluid to the nozzles 33;
   a robot arm R1 which has the coating head unit 30 installed on its distal end and which moves the coating head unit 30 to a desired position;
   a cap 93 that seals a nozzle forming surface 32 on which the nozzles 33 are exposed;
   a cap movement mechanism 94 that moves the cap 93 relative to the nozzle forming surface 32 to achieve a sealed state of the nozzle forming surface 32;
   a coating material supply passage 52 which supplies the coating material or the cleaning fluid toward the coating head 31;
   a return flow passage 53 which is connected to the coating material discharge side of the coating head 31 and which recovers the coating material or the cleaning fluid that was not ejected from the nozzles 33;
   a pressurization means (sending pump 64) which pressurizes the cleaning fluid that is to be supplied toward the coating head 31 in at least one of the coating material supply passage 52 and the return flow passage 53; and
   a control means (main control unit 110, cleaning control unit 150) which controls actuation of the pressurization means (sending pump 64);
   wherein
   the control means (main control unit 110, cleaning control unit 150):
      controls actuation of the cap movement mechanism 94 so as to seal the nozzle forming surface 32 with the cap 93; and
      controls actuation of the pressurization means (sending pump 64) so that the cleaning fluid is supplied to the internal flow passages 36 in a pressurized state.

In this way, by actuating the robot arm R1 to seal the nozzle forming surface 32 with the cap 93, and in that state, actuating the pressurization means (sending pump 64) to supply the cleaning fluid to the internal flow passages 36 of the coating head 31, it is possible to prevent the cleaning fluid from flowing out from the nozzles 33. Therefore, it becomes possible to increase the supply pressure of the cleaning fluid in the internal flow passages 36, to satisfactorily clean the internal flow passages 36 and the nozzles 33 with the cleaning fluid, and to eliminate clogging of the internal flow passages 36 and the nozzles 33.

Furthermore, it becomes possible to improve the cleaning performance with respect to the nozzles 33 and the internal flow passages 36 of the coating head 31 without requiring large-scale dedicated equipment for cleaning.

[2] Furthermore, in the above embodiment, in addition to the content set forth under [1] above, the cleaning system may comprise a suction means (at least one of the first vacuum ejector 91 and the second vacuum ejector 92) which sucks the cleaning fluid after executing cleaning of the coating head 31 in at least one of the coating material supply passage 52 and the return flow passage 53; and
the control means (main control unit 110, cleaning control unit 150) may:
control actuation of the suction means (at least one of the first vacuum ejector 91 and the second vacuum ejector 92) such that, after supplying the cleaning fluid to the internal flow passages 36 in a pressurized state with the pressurization means (sending pump 64), the cleaning fluid inside the internal flow passages 36 is discharged.

In this way, by actuating the suction means (at least one of the first vacuum ejector 91 and the second vacuum ejector 92) to discharge, in a suction state, the cleaning fluid that was supplied in a pressurized state, it becomes possible to improve the discharge performance with respect to foreign matter present in the internal flow passages 36 and the nozzles 33 together with the cleaning fluid. Therefore, it becomes possible to improve the cleaning performance with respect to the internal flow passages 36 and the nozzles 33 of the coating head 31.

[3] Furthermore, in the above embodiment, in addition to the content set forth under [1] and [2] above, or a combination thereof,
a first pressurization means (the sending pump 64, opening of one of either the fourth switching valve 84 or the fifth switching valve 85) corresponding to the pressurization means and a first suction means (one of either the first vacuum ejector 91 or the second vacuum ejector 92) corresponding to the suction means may be provided in the coating material supply passage 52;
a second pressurization means (the sending pump 64, opening of the other one of either the fourth switching valve 84 or the fifth switching valve 85) corresponding to the pressurization means and a second suction means (the other one of either the first vacuum ejector 91 or the second vacuum ejector 92) corresponding to the suction means may be provided in the return flow passage 53; and
the control means (main control unit 110, cleaning control unit 150) may perform control to execute:
   forward direction cleaning in which the first pressurization means (the sending pump 64, opening of one of either the fourth switching valve 84 or the fifth switching valve 85) is actuated to supply the cleaning fluid in a pressurized state via the coating material supply passage 52 to the internal flow passages 36, after which the second suction means (the other one of either the first vacuum ejector 91 or the second vacuum ejector 92) is actuated to discharge the cleaning fluid via the return flow passage 53 from the internal flow passages 36; and
   reverse direction cleaning in which the second pressurization means (the sending pump 64, opening of the other one of either the fourth switching valve 84 or the fifth switching valve 85) is actuated to supply the cleaning fluid in a pressurized state via the return flow passage 53 to the internal flow passages 36, after which the first suction means (one of either the first vacuum ejector 91 or the second vacuum ejector 92) is actuated to discharge the cleaning fluid via the coating material supply passage 52 from the internal flow passages 36.

In this manner, by executing the forward direction cleaning and the reverse direction cleaning, it becomes possible to improve the discharge performance with respect to foreign matter present in the internal flow passages 36 and the nozzles 33. Therefore, it becomes possible to improve the cleaning performance with respect to the internal flow passages 36 and the nozzles 33 of the coating head 31.

[4] Furthermore, in the above embodiment, in addition to the content set forth under any one of [1] to [3] described above, or a combination thereof,
the control means (main control unit 110, cleaning control unit 150) may: when executing at least one cleaning operation from among the forward direction cleaning and the reverse direction cleaning, actuate the cap movement mechanism 94 to vary the sealing pressure applied by the cap 93 to the nozzle forming surface 32, or release the sealed state of the nozzle forming surface 32 effected by the cap 93 and then reseal it.

In this way, by actuating the cap movement mechanism 94 to vary the sealing pressure applied by the cap 93 to the nozzle forming surface 32, for example, the cleaning fluid can be caused to leak out from the nozzles 33, and it becomes possible to improve the discharge performance with respect to foreign matter present in the internal flow passages 36 and the nozzles 33, and to improve the cleaning performance. Furthermore, by releasing the sealed state of the nozzle forming surface 32 effected by the cap 93, the direction of flow of the cleaning fluid, such as cleaning liquid and air, in the internal flow passages 36 and the nozzles 33 inside the coating head 31 is significantly changed, so it becomes possible to improve the discharge performance with respect to foreign matter present in the internal flow passages 36 and the nozzles 33, and to improve the cleaning performance.

### [Description of Reference Numerals]

1... cleaning system, 2... nozzle forming surface, 10... coating robot, 20... robot main body, 21... base, 22a... first axis of rotation, 22b... second axis of rotation, 22c... third axis of rotation, 22d... fourth axis of rotation, 22e... fifth axis of rotation, 22f... sixth axis of rotation, 23... leg part, 24... first turning arm, 25... second turning arm, 26... rotary arm, 27... wrist part, 30... coating head unit, 31... coating head, 32... nozzle forming surface, 33... nozzle, 34... nozzle row, 34A... first nozzle row, 34B... second nozzle row, 35... piezoelectric substrate, 36... internal flow passage, 37... nozzle pressurization chamber, 50... coating material supply and cleaning mechanism, 51... coating material circulation passage, 52... coating material supply passage, 53... return flow passage, 54... bypass flow passage, 55... external supply passage, 56... second bypass flow passage, 57... coating material tank, 58... removal filter, 59... degassing module, 61... supply pump, 62... suction pump, 63... cleaning tank, 64... sending pump (corresponding to pressurization means, first pressurization means or second pressurization means), 65... liquid evacuation tank, 66... compressor, 67... cleaning switching valve, 67a to 67c... valve part, 71... first three-way valve, 72... second three-way valve, 73... third three-way valve, 74... fourth three-way valve, 81... first switching valve, 81a to 81d... valve part, 82... second switching valve, 82a to 82d... valve part, 83... third switching valve, 83a to 83d... valve part, 84... fourth switching valve, 84a to 84f... valve part, 85... fifth switching valve, 85a to 85f... valve part, 86... sixth switching valve, 86a to 86d... valve part, 91... first vacuum ejector (corresponding to suction means, first suction means or second suction means), 92... second vacuum ejector (corresponding to suction means, first suction means or second suction means), 93... cap, 94... cap movement mechanism, 95... vacuum ejector (corresponding to cleaning suction means), 100... control unit (corresponding to control means), 110... main control unit (corresponding to control means), 120... robot arm control unit, 130... head control unit, 140... coating material supply control unit, 150... cleaning control unit (corresponding to control means), R1... robot arm

## Claims

1. A cleaning system for a coating robot that performs coating on a coating portion of a vehicle using a cleaning fluid containing at least one of a cleaning liquid and air, the cleaning system for a coating robot being **characterized in that** it comprises:
a coating head unit comprising a coating head that has a plurality of nozzles that eject droplets of a coating material, arrayed in a primary scanning direction and a secondary scanning direction, and a plurality of internal flow passages for supplying said coating material or said cleaning fluid to the nozzles;
a robot arm which has said coating head unit installed on its distal end and which moves the coating head unit to a desired position;
a cap that seals a nozzle forming surface on which said nozzles are exposed;
a cap movement mechanism that moves said cap relative to said nozzle forming surface to achieve a sealed state of said nozzle forming surface;
a coating material supply passage which supplies said coating material or said cleaning fluid toward said coating head;
a return flow passage which is connected to the coating material discharge side of said coating head and which recovers said cleaning fluid or said coating material that was not ejected from said nozzles;
a pressurization means which pressurizes said cleaning fluid that is to be supplied toward said coating head in at least one of said coating material supply passage and said return flow passage; and
a control means which controls actuation of said pressurization means;
wherein:
said control means
controls actuation of said cap movement mechanism so as to seal said nozzle forming surface with said cap; and
controls actuation of said pressurization means so that said cleaning fluid is supplied to said internal flow passages in a pressurized state.

2. The cleaning system for a coating robot according to Claim 1,
the cleaning system for a coating robot being **characterized in that** it comprises:
a suction means which sucks said cleaning fluid after executing cleaning of said coating head in at least one of said coating material supply passage and said return flow passage,
wherein preferably:
said control means controls actuation of said suction means such that, after supplying said cleaning fluid to said internal flow passages in a pressurized state with said pressurization means, said cleaning fluid inside said internal flow passages is discharged.

3. The cleaning system for a coating robot according to Claim 2,
the cleaning system for a coating robot being **characterized in that**:
a first pressurization means corresponding to said pressurization means and a first suction means corresponding to said suction means are provided in said coating material supply passage; and/or
a second pressurization means corresponding to said pressurization means and a second suction means corresponding to said suction means are provided in said return flow passage; and
said control means preferably performs control to execute:
forward direction cleaning in which said first pressurization means is actuated to supply said cleaning fluid in a pressurized state via said coating material supply passage to said internal flow passages, after which said second suction means is actuated to discharge said cleaning fluid via said return flow passage from said internal flow passages; and/or
reverse direction cleaning in which said second pressurization means is actuated to supply said cleaning fluid in a pressurized state via said return flow passage to said internal flow passages, after which said first suction means is actuated to discharge said cleaning fluid via said coating material supply passage from said internal flow passages.

4. The cleaning system for a coating robot according to Claim 3,
the cleaning system for a coating robot being **characterized in that**:
said control means, when executing at least one cleaning operation from among said forward direction cleaning and said reverse direction cleaning, actuates said cap movement mechanism to vary the sealing pressure applied by said cap to said nozzle forming surface, or releases the sealed state of said nozzle forming surface effected by said cap and then again reseals it.
